# EUROPÄISCHE PATENTSCHRIFT

(11) **EP 0 664 176 B1**
(45) Veröffentlichungstag und Bekanntmachung des Hinweises auf die Patenterteilung: **03.12.1997**
(21) Anmeldenummer: 95100445.6
(22) Anmeldetag: 13.01.1995
(51) Int. Cl.: B23C 1/12, B23Q 1/54

(54) **Universal-Fräs- und Bohrmaschine**
Universal milling and boring machine
Fraiseuse-aléseuse universelle

(30) Priorität: 25.01.1994 DE 4402084
(43) Veröffentlichungstag der Anmeldung: 26.07.1995
(73) Patentinhaber: DECKEL MAHO GmbH, D-87459 Pfronten (DE)
(72) Erfinder: Geissler, Alfred, Dipl.-Ing., D-87459 Pfronten (DE)
(74) Vertreter: Beetz & Partner Patentanwälte

(56) Entgegenhaltungen:
- EP-A- 0 287 748
- EP-A- 0 408 264
- DE-A- 3 432 371
- DE-C- 2 944 983
- DE-C- 3 407 679
- FR-A- 1 304 586
- FR-A- 2 307 615
- GB-A- 2 167 327
- US-A- 3 448 656

## Beschreibung

Die Erfindung betrifft eine Universal-Fräs- und Bohrmaschine der im Oberbegriff des Patentanspruchs 1 angegebenen Gattung. Eine solche Fräs- und Bohrmaschine ist z.B. aus der EP-A-0 401 264 bekannt.

Bei einer aus der DE-PS 29 44 983 bekannten Werkzeugmaschine ist eine horizontale Arbeitsspindel im unteren Teil eines Spindelgehäuses gelagert, mit der in herkömmlicher Weise horizontal Bearbeitungsvorgänge an einem aufgespannten Werkstück durchgeführt werden. An der um 45° nach schräg oben geneigten vorderen Stirnwand des Spindelgehäuses ist ein Schwenkkopf um seine 45°-Mittelachse verdrehbar montiert. An einer Seite dieses Schwenkkopfes ist ein Vertikal-Fräskopf befestigt, der durch eine Verdrehbewegung des Schwenkkopfes auf der Schrägfläche um 180° aus einer oberen horizontalen Stand-by-Position in seine vertikale Betriebsstellung gebracht und in dieser fixiert werden kann. Im hinteren Teil des Spindelgehäuses ist ein mit einem Antriebsmotor gekoppeltes Schaltgetriebe angeordnet, dessen Abtriebswelle über eine durch das Spindelgehäuse verlaufende Hauptwelle und eine Schieberadanordnung entweder mit der Horizontal-Arbeitsspindel oder über eine zusätzliche Zwischenwelle mit einem Kegelradgetriebe mit der Vertikal-Arbeitsspindel gekuppelt wird. Da das Schaltgetriebe bereits am Anfang des gesamten Getriebezuges angeordnet ist, müssen sämtliche zwischen Schaltgetriebe und Vertikal- bzw. Horizontalspindel liegenden Antriebswellen, Zahnräder und dazugehörige Lagerungen zur Übertragung hoher Drehmomente ausgelegt und dimensioniert sein. Darüber hinaus erfordert die komplette Horizontalspindelanordnung einen erheblichen konstruktiven Aufwand und ein entsprechend großes Bauvolumen.

Ferner ist eine Spindelanordnung für eine Universal-Fräs- und Bohrmaschine bekannt (SHW-Prospekt UF5), bei der an der freien Stirnfläche des Spindelstocks ein Schwenkkopf montiert ist, welcher in einer nach oben weisenden 45°-Schrägebene gegenüber dem Spindelstock um jeweils 180° verdrehbar angeordnet ist. Dieser Schwenkkopf trägt an einer Stirnseite die Horizontalspindel, und an der anderen Stirnfläche ist ein Vertikalfräskopf in üblicher Weise angeschraubt. Durch ein Verdrehen des Schwenkkopfes um eine senkrecht zur 45°-Schrägebene verlaufende Drehachse kann entweder die Horizontalspindel oder die Vertikalspindel in ihre Arbeitsposition gebracht werden. Nach der Positionierung der einen oder anderen Arbeitsspindel erfolgt über eine Kupplung die form- oder kraftschlüssige Verbindung mit der Abtriebswelle des Hauptgetriebes.

Bei der gattungsgemäßen Universal-Fräs- und Bohrmaschine nach der EP-A-0 408 264 ermöglicht die 45°-Neigung der vorderen Stirnwand nach schräg unten die Verwendung nur eines einzigen Fräskopfes für die horizontale und die vertikale Werkstückbearbeitung. Zu diesem Zweck ist der Fräskopf selbst als Schwenkfräskopf ausgebildet.

Aufgabe der Erfindung ist es eine Universal-Fräs- und Bohrmaschine der eingangs genannten Art so weiterzubilden, daß mit geringerem konstruktiven Aufwand und vermindertem Platzbedarf ein optimierter Kraftfluß vom Antriebsmotor auf die Arbeitsspindel gewährleistet ist.

Diese Aufgabe wird erfindungsgemäß durch die im Patentanspruch 1 angegebenen Merkmale gelöst.

Durch die Verlagerung des Schaltgetriebes in den Schwenkfräskopf kann im gesamten Getriebezug zwischen dem Antriebsmotor und der Arbeitsspindel solange wie möglich eine hohe Drehzahl beibehalten werden. Die große Untersetzung erfolgt erst unmittelbar an der Arbeitsspindel, so daß die damit verbundenen hohen Drehmomente erst am Ende des Antriebszuges unmittelbar vor der Arbeitsspindel auftreten. Die der Arbeitsspindel vorgeordneten Zahnräder und Antriebswellen können demgegenüber mit vergleichsweise hohen Drehzahlen betrieben und entsprechend den geringeren Momenten kleiner dimensioniert werden. Die Kegelradverzahnung ist vor dem Untersetzungsgetriebe, so daß die Kegelräder aufgrund der kleineren Momente entsprechend geringere Abmessungen aufweisen können. Durch eine derartige Anordnung kann mit einem relativ geringen konstruktiven Aufwand eine optimierte Kraftübertragung vom Antriebsmotor auf die Arbeitsspindel erreicht werden, wobei das erforderliche Bauvolumen und der Fertigungsaufwand verringert wird.

In einer zweckmäßigen Ausgestaltung der Erfindung weist das Schaltgetriebe ein über das Kegelradgetriebe angetriebenes Stirnrad auf, das auf einer zur Arbeitsspindel parallelen Zwischenwelle im Schwenkkopf gelagert ist. Dieses Stirnrad treibt einen Schieberadsatz mit zwei unterschiedlich großen Zahnrädern an, die je nach verschiebestellung mit entsprechenden Zahnrädern auf der Arbeitsspindel in Eingriff gebracht werden. Dadurch wird ein kompaktes zweistufiges Vorgelegegetriebe mit einem geringen Bauvolumen geschaffen.

Gemäß einer weiteren vorteilhaften Ausführung der Erfindung weist der Schieberadsatz ein erstes Vorgelegerad auf, das in einer ersten Schaltstellung mit dem Stirnrad und einem Zahnkranz auf der Arbeitsspindel in Eingriff steht. Ein mit dem ersten Vorgelegerad drehfest verbundenes zweites Vorgelegerad kämmt in einer zweiten Schaltstellung mit einem Stirnrad, das auf der Arbeitsspindel sitzt. Dies ermoglicht eine einfache Schaltung zweier Drehzahlbereiche.

Ein getriebetechnisch einfacher Aufbau bei geringem Bauvolumen wird durch eine schräge 45°-Anordnung des Antriebsmotors in dem beweglichen Traggehäuse erreicht, wobei die Motorwelle koaxial zur Drehachse des Schwenkfräskopfes verläuft und auf ihrem vorderen Ende das treibende Kegelrad des Kegelradgetriebes trägt. Dadurch werden für den gesamten Getriebezug nur zwei miteinander kämmende Kegelräder benötigt und die Arbeitsspindel kann sowohl in einer vertikalen als auch in einer horizontalen Arbeitsstellung über einen einzigen gemeinsamen Getriebezug angetrieben werden. Eine weitere getriebetechnische Vereinfachung kann dadurch erreicht werden, daß auch die Schwenk- bzw.Drehbewegung des Schwenkfräskopfes von der Motorwelle durchgeführt wird, wodurch ein gesonderter Drehantrieb für den Schwenkfräskopf eingespart werden kann. Zu diesem Zweck kann die Motorwelle beispielsweise über eine lösbare Klemmung mit dem Gehäuse des Schwenkfräskopfes verbunden werden, so daß sich der Schwenkfräskopf zusammen mit der Motorwelle verdreht.

Bei Verwendung eines gesonderten Verstellantriebs für den Schwenkfräskopf ist es zweckmäßig, die den Motor durchragende Motorwelle als Hohlwelle auszuführen und in dieser Hohlwelle eine Stellwelle anzuordnen, deren vorderes freies Ende mit dem Gehäuse des Schwenkkopfes fest verbunden ist und an deren hinterem aus der Hohlwelle herausragendem Ende der im Traggehäuse montierte Stellantrieb angreift. Dadurch wird eine sehr kompakte und platzsparende Dreheinrichtung zum Verschwenken des Fräskopfes zwischen der vertikalen und der horizontalen Arbeitsstellung erreicht.

Darüber hinaus ist auch eine lösbare Klemmeinrichtung vorgesehen, die eine verdrehsichere und genaue Arretierung des Schwenkfräskopfes an dem Traggehäuse während der Bearbeitung gewährleistet.

Weitere Vorteile und Besonderheiten der Erfindung ergeben sich aus der folgenden Beschreibung eines bevorzugten Ausführungsbeispiels anhand der schematischen Zeichnung. Es zeigen:
- Fig. 1: eine Universal-Fräs- und Bohrmaschine in schematischer Seitenansicht;
- Fig. 2: schematisch einen Gesamtantrieb für eine Maschine nach Fig. 1;
- Fig. 3: eine konstruktive Ausführung des Gesamtantriebs nach Fig. 2.

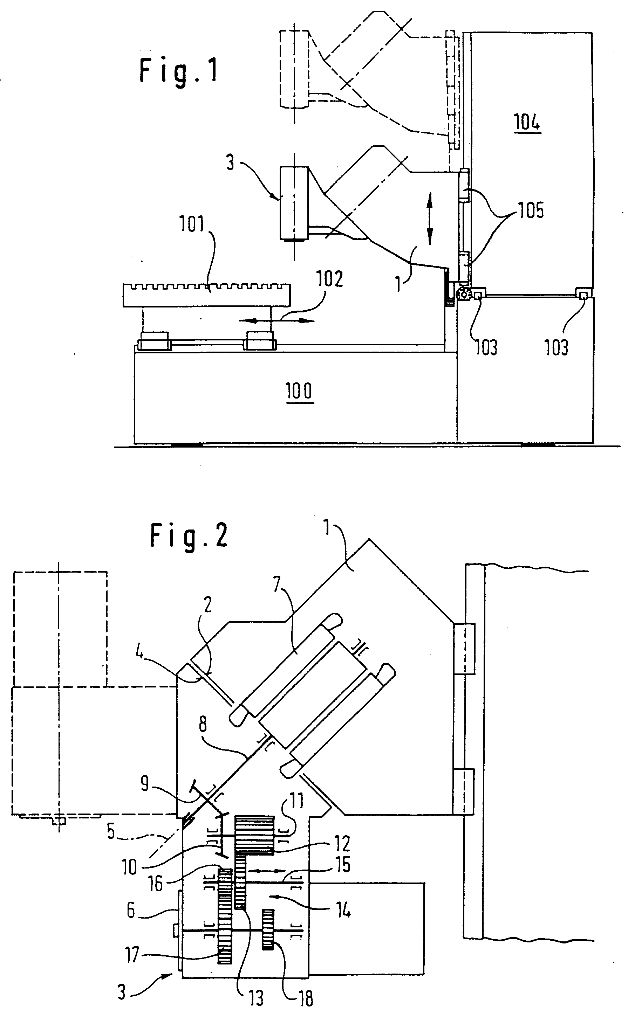

Die in Fig. 1 dargestellte Werkzeugmaschine hat ein Bett 100, auf dem ein Werkstücktisch 101 in Richtung des Doppelpfeils 102 motorisch verfahrbar ist. Auf dem hinteren Teil des Bettes 100 sind Führungsschienen 103 senkrecht zur Zeichenebene montiert, auf denen ein Fahrständer 104 abgestützt und geführt ist. An der Vorderseite des Fahrständers 104 montierten Vertikalführungen 105 ist ein erfindungsgemäß ausgebildeter Schwenkfräskopf 3 über ein Traggehäuse 1 vertikal motorisch verfahrbar angeordnet.

Das am Fahrständer 104 verfahrbar geführte Traggehäuse 1 weist an seinem vorderen freien Ende eine gegenüber der Vertikalen um 45° geneigte, schräg nach unten weisende Stirnwand 2 auf. An dieser Stirnwand 2 ist ein Schwenkfräskopf 3 mit einer ebenfalls unter 45° gegenüber der Vertikalen geneigten Anlagefläche 4 um eine zur Stirnwand 2 senkrechte Schwenkachse 5 verdrehbar montiert. In dem Schwenkfräskopf 3 ist eine unter 45° zur Schwenkachse 5 angeordnete Arbeitsspindel 6 gelagert, die durch entsprechende Drehung des Schwenkfräskopfes 3 zwischen einer - in Fig. 2 durchgezogen dargestellten - horizontalen Bearbeitungsstellung und einer - in Fig. 2 gestrichelt dargestellten - vertikalen Bearbeitungsstellung verschwenkt werden kann.

In dem Traggehäuse 1 ist ein drehzahlgesteuerter Antriebsmotor 7 koaxial zur Drehachse 5 angeordnet, auf dessen zur Schwenkachse 5 koaxialen Motorwelle 8 ein treibendes Kegelrad 9 eines Kegelradgetriebes befestigt ist. Das treibende Kegelrad 9 steht in Eingriff mit einem getriebenen Kegelrad 10, das im Schwenkfräskopf 3 auf einer zur Arbeitsspindel 6 parallelen Zwischenwelle 11 sitzt. Auf der Zwischenwelle 11 ist ferner ein mit dem getriebenen Kegelrad 10 drehfest verbundenes Stirnrad 12 angeordnet, das mit einem größeren Vorgelegerad 13 eines Schieberadsatzes 14 kämmt. Der Schieberadsatz 14 ist auf einer Vorgelegewelle 15 axial verschiebbar und umfaßt ein drehfest mit dem größeren Vorgelegerad 13 verbundenes kleineres Vorgelegerad 16, das in einer - in Fig. 2 gezeigten - ersten Schaltstellung mit einem großen Zahnrad 17 auf der Arbeitsspindel 6 in Eingriff steht. In dieser Schaltstellung geht der Kraftfluß vom Antriebsmotor 7 über das Kegelradgetriebe 9, 10 und das Stirnrad 12 zum größeren Vorgelegerad 13 und über das kleinere Vorgelegerad 16 zum großen Zahnrad 17 auf der Arbeitsspindel 6, was eine Untersetzung der Motorendrehzahl ins Langsame bedeutet. Bei einer Axialverschiebung des Schieberadsatzes 14 bleibt das größere Vorgelegerad 13 im Eingriff mit dem Stirnrad 12 und gelangt in einer zweiten Schaltstellung zusätzlich in Eingriff mit einem kleinen Zahnrad 18 auf der Arbeitsspindel 6. Gleichzeitig gelangt das mit dem größeren Vorgelegerad 13 verbundene kleinere Vorgelegerad 16 außer Eingriff mit dem großen Zahnrad 17 an der Arbeitsspindel 6. In dieser zweiten Schaltstellung geht der Kraftfluß vom Antriebsmotor 7 über das Kegelradgetriebe 9, 10 und das Stirnrad 12 zum großen Vorgelegerad 13 und zum kleinen Zahnrad 18 an der Arbeitsspindel 6. Da bei dem in Fig. 2 dargestellten Ausführungsbeispiel sowohl die Kegelräder 9 und 10 als auch das Stirnrad 12 und das kleine Zahnrad 18 an der Arbeitsspindel 6 denselben Durchmesser aufweisen, wirkt das größere Vorgelegerad 13 lediglich als Zwischenrad und es wird in der zweiten Schaltstellung eine 1:1-Übersetzung zwischen dem Antriebsmotor 7 und der Arbeitsspindel 6 erreicht.

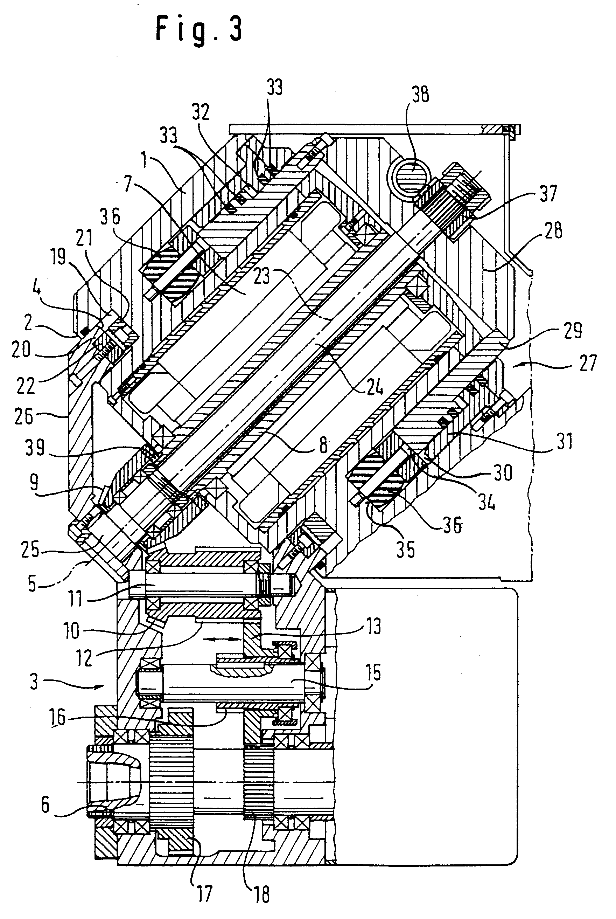

Bei dem in Fig. 3 dargestellten konstruktiven Ausführungsbeispiel ist in der Stirnwand 2 des Traggehäuses 1 eine Ringnut 19 ausgebildet, in der ein unter 45° zur Drehachse der Arbeitsspindel 6 geneigter ringförmiger Ansatz 20 am Schwenkfräskopf 3 geführt ist. An der Innenseite der Ringnut 19 ist ein Radkranz 21 mit einer Stirnverzahnung angeordnet, der mit einem entsprechend stirnverzahnten Radkranz 22 am ringförmigen Ansatz 20 des Schwenkfräskopfes 3 in Eingriff gelangt. Der Antriebsmotor 7 ist derart im Traggehäuse 1 angeordnet, daß die Drehachse 23 seiner im Traggehäuse 1 gelagerten Antriebswelle 8 mit der Schwenkachse 5 des Fräskopfes 3 zusammenfällt. In der als Hohlwelle ausgebildeten Antriebswelle 8 ist eine verdrehbare und axial bewegliche Stellwelle 24 geführt, deren vorderes freies Wellenende 25 drehfest mit dem Gehäuse 26 des Schwenkfräskopfes 3 verbunden ist. Über eine lösbare Klemmeinrichtung 27 wird die Stellwelle 24 so in Axialrichtung beaufschlagt, daß der ringförmige Ansatz 20 am Schwenkfräskopf 3 über die Stellwelle 24 in die Ringnut 9 eingezogen wird, wobei die stirnverzahnten Radkränze 21 bzw. 22 am Traggehäuse 1 bzw. am Gehäuse 26 des Schwenkfräskopfes 3 eingerückt werden. Dadurch wird eine verdrehsichere und positionsgenaue verbindung zwischen dem Traggehäuse 1 und dem Schwenkfräskopf 3 während der Bearbeitung erreicht.

Die lösbare Klemmeinrichtung 27 umfaßt eine Druckplatte 28, die an dem aus der hohlen Antriebswelle 8 herausragenden hinteren Bereich der Stellwelle 24 festgelegt ist. Die Druckplatte 28 ist fest mit einem Stellring 29 verbunden, der an der Innenwand eines zum Antriebsmotor 7 koaxialen Ringraums 30 im Traggehäuse 1 axial verschiebbar geführt ist. An seiner Außenseite ist der Stellring 29 in einer Einsatzbuchse 31 geführt, die in den Ringraum 30 eingesetzt und am Traggehäuse 1 fixiert ist. Von dem Stellring 29 und der Einsatzbuchse 31 wird ein mit Druckfluid beaufschlagbarer Druckraum 32 begrenzt, der durch Dichtringe 33 im Stellring 29 und der Einsatzbuchse 31 abgedichtet wird. Zwischen der im Ringraum 30 befindlichen Stirnfläche 34 des Stellrings 29 und einer Bodenfläche 35 des Ringraums 22 ist ein elastisches Druckelement 36 angeordnet, durch das die Stellwelle 24 über den Stellring 29 und die Druckplatte 28 zur Beibehaltung der verdrehsicheren Verbindung zwischen dem Traggehäuse 1 und dem Schwenkfräskopf 3 axial vorgespannt wird. Das über die Druckplatte 28 vorstehende hintere Ende der Stellwelle 24 trägt eine Außenverzahnung 37, die mit einem motorisch angetriebenen Schneckenrad 38 in Eingriff steht.

Zum Verdrehen des Schwenkfräskopfes 3 wird der Druckraum 32 mit Druckfluid beaufschlagt, wodurch der Stellring 29 entgegen der durch das elastische Druckelement 36 ausgeübten Vorspannkraft aus seiner Klemmstellung axial verschoben wird, bis die zwischen dem Traggehäuse 1 und dem Schwenkfräskopf 3 liegende Stirnverzahnung in der Ringnut 19 ausgerückt ist. Dabei wird auch das auf der Stellwelle 24 gelagerte treibende Kegelrad 9 axial verschoben, wobei eine zwischen dem Kegelrad 9 und der Antriebswelle 8 des Antriebsmotors 7 wirkende Verzahnung 39 im Eingriff bleibt. Durch anschließende Drehung des Schneckenrads 38 kann die Stellwelle 24 zusammen mit dem Schwenkfräskopf 3 und dem gesamten Getriebe in eine beliebige Schräglage oder in eine der Endstellungen verschwenkt werden. Während dieser Schwenkbewegung rotiert die Arbeitsspindel 6 weiter. Wenn der Schwenkfräskopf 3 die gewünschte Position erreicht hat, kann das Druckfluid aus dem Druckraum 32 abgelassen werden, wodurch der Stellring 29 unter der Kraft des elastischen Druckelements 36 wieder in die Klemmstellung zurückgeschoben und die Stirnverzahnung zwischen dem Traggehäuse 1 und dem Schwenkfräskopf 3 sowie die Verzahnung 39 zwischen dem Kegelrad 9 und der Antriebswelle 8 über die Druckplatte 28 und die Stellwelle 24 verdrehsicher eingerückt wird.

Die Übertragung der Drehbewegung vom Antriebsmotor 7 auf die Arbeitsspindel 6 erfolgt über das treibende hohlzylindrische Kegelrad 9, das auf der Stellwelle 24 zwischen ihrem mit dem Schwenkkopf fest verbundenen vorderen Ende 25 und der Stirnwand 2 des Traggehäuses 1 drehbar gelagert und über die Verzahnung 39 drehfest mit der hohlen Motorwelle 8 des Antriebsmotors 7 verbunden ist. Das treibende Kegelrad 9 kämmt mit dem getriebenen ebenfalls hohlzylindrischen Kegelrad 10, das zusammen mit dem Stirnrad 12 auf der zur Arbeitsspindel 6 parallelen Zwischenwelle 11 drehbar gelagert ist. Das Stirnrad 12 und das getriebene Kegelrad 10 sind als einteiliges Bauelement mit einer Stirn- und einer Kegelverzahnung gefertigt, können aber auch als zwei gesonderte drehfest miteinander und ggf. mit der Zwischenwelle 11 verbundene Einzelräder ausgebildet sein.

Das Stirnrad 12 steht in Eingriff mit dem größeren Vorgelegerad 13, das zusammen mit dem kleinere Vorgelegerad 16 auf einer zur Arbeitsspindel 6 parallelen und seitlich versetzten Vorgelegewelle 15 drehfest und axial verschiebbar geführt ist. Die Vorgelegewelle 15 kann in derselben Ebene wie die Arbeitsspindel 6 und das Stirnrad 12 angeordnet oder zur Reduzierung des Platzbedarfs gegenüber der in Fig. 2 gezeigten Lage seitlich und in der Höhe versetzt sein.

Die Vorgelegewelle 15 ist im Schwenkfräskopf 3 drehbar gelagert. Das kleine Vorgelegerad 16 ist als drehfest auf der Vorgelegewelle 15 geführte Schiebebuchse ausgeführt, die in ihrem vorderen Bereich die Verzahnung zum Eingriff mit dem großen Zahnrad 17 an der Arbeitsspindel 6 trägt. Auf dem verzahnungsfreien hinteren Bereich der Schiebebuchse 16 ist das größere Vorgelegerad 13 drehfest fixiert. Das hintere Ende der Schiebebuchse ist über ein Radiallager in einer Schalthülse angeordnet, die durch einen - nicht dargestellten - Stellzylinder axial verschiebbar ist. Durch Betätigung des Stellzylinders können somit die Zahnräder 13 und 18 oder die Zahnräder 16 und 17 in Eingriff miteinander gebracht werden, wobei in einer möglichen Zwischenstellung die Arbeitsspindel 6 vom Antriebsmotor 7 abgekoppelt ist. Durch dieses zweistufige Schaltgetriebe kann an der Arbeitsspindel 6 auch im unteren Drehzahlbereich ein hohes Drehmoment zur Verfügung gestellt werden.

Die Erfindung ist nicht auf die dargestellten Ausführungsbeispiele beschränkt. So kann die in den Figuren 2 und 3 dargestellte Antriebsanordnung auch in anderen Fräs- und Bohrmaschinen eingesetzt werden, wobei in diesen Fällen u.a. der Tragrahmen konstruktiv angepaßt werden müßte. Ferner kann der Schwenkfräskopf 3 statt durch den in Fig. 3 dargestellten Verdrehantrieb 24, 25, 37, 38 auch direkt durch eine Verdrehung der Motorwelle 8 verdreht werden, die - wie in Fig. 2 schematisch durch die dort angedeutete Klemmhülse am Wellenende gezeigt - mit dem Gehäuse des Schwenkfräskopfes lösbar verbunden werden kann. Durch diesen abgeleiteten Verdrehantrieb des Schwenkkopfes vereinfacht sich die Gesamtkonstruktion erheblich, da die Bauelemente für den o.g. gesonderten Drehantrieb entfallen können. Schließlich können statt der dargestellten Klemmeinrichtung 27 und der Zahnkränze 21, 22 auch andere Mittel zum genauen Arretieren des Schwenkfräskopfes 3 in beliebigen vorgewählten Schräglagen bzw. in den Endstellungen eingesetzt werden. Obwohl die um 45° geneigte Anordnung des Antriebsmotors 7 im Traggehäuse 1 getriebetechnisch einfach und raumsparend ist, kann der Antriebsmotor 7 auch in einer anderen Ausrichtung im oder am Traggehäuse montiert werden, wobei dann ggf. ein weiteres Umlenkgetriebe eingesetzt und/oder die bestehenden Getriebeelemente entsprechend angepaßt werden müßten. Die Arbeitsspindel kann auch in einer ausfahrbaren Pinole angeordnet sein, wodurch sich der Arbeitsbereich vergrößert.

## Patentansprüche

1. Universal-Fräs- und Bohrmaschine mit
- einem auf einer Konsole oder einem Bett montierten Werkstücktisch (101),
- einem Maschinenständer (104), an dem ein Traggehäuse (1) montiert ist,
- einem Schwenkkopf, der an einer unter 45° gegenüber der Vertikalen nach schrägunten geneigten vorderen Stirnwand (2) des Traggehäuses (1) um eine zur Stirnwand (2) senkrechte Drehachse (5) verdrehbar ist,
- einer in einem Fräskopf drehbar gelagerten Arbeitsspindel (6), deren Drehachse (23) unter 45° gegenüber der Drehachse (5) des Schwenkkopfes angeordnet ist, und
- einem Antriebsmotor (7), der über ein Kegelradgetriebe (9, 10) und ein Schaltgetriebe (12, 14, 17, 18) mit der Arbeitsspindel (6) kuppelbar ist, wobei
- der Schwenkkopf mit dem Fräskopf zu einem Schwenkfräskopf (3) vereinigt ist,
dadurch **gekennzeichnet,** daß
das dem Kegelradgetriebe (9, 10) nachgeordnete Schaltgetriebe (12, 14, 17, 18) für die einzige Arbeitsspindel (6) in dem Schwenkfräskopf (3) angeordnet ist.

2. Universal-Fräs- und Bohrmaschine nach Anspruch 1,
dadurch gekennzeichnet, daß
der Antriebsmotor (7) für die Arbeitsspindel (6) im Traggehäuse (1) so angeordnet ist, daß die Getriebe-Eingangswelle (8) koaxial zur Drehachse (5) des Schwenkfräskopfes (3) verläuft und das treibende Kegelrad (9) des Kegelradgetriebes (9, 10) trägt.

3. Universal-Fräs- und Bohrmaschine nach Anspruch 2,
dadurch gekennzeichnet, daß
die Ausgangswelle (8) des Antriebsmotors (7) koaxial zur Drehachse (5) des Schwenkfräskopfes (3) verläuft.

4. Universal-Fräs- und Bohrmaschine nach Anspruch 3,
dadurch gekennzeichnet, daß
das treibende Kegelrad (9) des Kegelradgetriebes (9, 10) auf einer zur Schwenkachse (5) koaxialen Stellwelle (24) am Schwenkfräskopf (3) gelagert und mit dem freien Ende der zur Schwenkachse (5) koaxialen Antriebswelle (8) des Antriebsmotors (7) kuppelbar ist.

5. Universal-Fräs- und Bohrmaschine nach Anspruch 4,
dadurch gekennzeichnet, daß
die Antriebswelle (8) als Hohlwelle ausgebildet ist, in der die mit dem Schwenkfräskopf (3) drehfest verbundene Stellwelle (24) geführt ist.

6. Universal-Fräs- und Bohrmaschine nach einem der Ansprüche 1 bis 5,
dadurch gekennzeichnet, daß
das Schaltgetriebe ein über das Kegelradgetriebe (9, 10) angetriebenes Stirnrad (12) auf einer zur Arbeitsspindel (6) parallelen Zwischenwelle (11) und einem mit dem Stirnrad (12) kämmenden Schieberadsatz (14) auf einer zur Arbeitsspindel (6) parallelen Vorgelegewelle (15) aufweist, wobei die Vorgelegezahnräder (13, 14) des Schieberadsatzes (14) wahlweise mit Zahnrädern (17, 18) auf der Arbeitsspindel (6) in Eingriff bringbar sind.

7. Universal-Fräs- und Bohrmaschine nach Anspruch 6,
dadurch gekennzeichnet, daß das zweite Vorgelegerad (16) als eine auf der Vorgelegewelle (15) drehfest und axial verschiebbar angeordnete Buchse ausgebildet ist, die in ihrem vorderen Bereich eine Außenverzahnung zum Eingriff mit dem zweiten Zahnrad (17) aufweist und auf ihrem verzahnungsfreien hinteren Bereich das erste Vorgelegerad (13) drehfest trägt.

8. Universal-Fräs- und Bohrmaschine nach Anspruch 6 oder 7,
dadurch gekennzeichnet, daß
der Schieberadsatz (14) in einer durch einen Stellzylinder (42) axial beweglichen Schalthülse gelagert und axial gesichert ist.

9. Universal-Fräs- und Bohrmaschine nach einem der Ansprüche 1 bis 8,
dadurch gekennzeichnet, daß
eine Einrichtung (37, 38) zum verdrehen des Schwenkfräskopfes (3) zwischen einer horizontalen und einer vertikalen Bearbeitungsstellung vorgesehen ist.

10. Universal-Fräs- und Bohrmaschine nach einem der Ansprüche 1 bis 8,
dadurch gekennzeichnet, daß
der Schwenkfräskopf (3) durch den Antriebsmotor (7) verdrehbar ist.

11. Universal-Fräs- und Bohrmaschine nach einem der Ansprüche 1 bis 10,
dadurch gekennzeichnet, daß
in dem Traggehäuse (1) eine lösbare Klemmeinrichtung (27) zur verdrehsicheren Arretierung des Schwenkfräskopfes (3) am Traggehäuse (1) in der gewählten Bearbeitungsstellung angeordnet ist.

## Claims

1. Universal milling and drilling machine having
- a workpiece table (101) mounted on a knee or a bed,
- a machine column (104) on which a supporting housing (1) is mounted,
- a swivel head which is turnable, at a front end wall (2), inclined obliquely downwards at 45° with respect to the vertical, of the supporting housing (1), about an axis of rotation (5) perpendicular to the end wall (2),
- a work spindle (6) which is rotatably mounted in a milling head and the axis of rotation (23) of which is arranged at 45° with respect to the axis of rotation (5) of the swivel head, and
- a drive motor (7) which can be coupled to the work spindle (6) via a bevel gear transmission (9, 10) and a shift transmission (12, 14, 17, 18),
- the swivel head being combined with the milling head to form a swivel milling head (3), characterised in that the shift transmission (12, 14, 17, 18), arranged downstream of the bevel gear transmission (9, 10), for the single work spindle (6) is arranged in the swivel milling head (3).

2. Universal milling and drilling machine according to Claim 1, characterised in that the drive motor (7) for the work spindle (6) is arranged in the supporting housing (1) in such a way that the transmission input shaft (8) extends coaxially to the axis of rotation (5) of the swivel milling head (3) and bears the driving bevel gear (9) of the bevel gear transmission (9, 10).

3. Universal milling and drilling machine according to Claim 2, characterised in that the output shaft (8) of the drive motor (7) extends coaxially to the axis of rotation (5) of the swivel milling head (3).

4. Universal milling and drilling machine according to Claim 3, characterised in that the driving bevel gear (9) of the bevel gear transmission (9, 10) is mounted on an actuating shaft (24), coaxial to the swivel axis (5), in the swivel milling head (3) and can be coupled to the free end of the drive shaft (8), coaxial to the swivel axis (5), of the drive motor (7).

5. Universal milling and drilling machine according to Claim 4, characterised in that the drive shaft (8) is designed as a hollow shaft in which is guided the actuating shaft (24), connected to the swivel milling head (3) in such a way as to be fixed in terms of rotation.

6. Universal milling and drilling machine according to one of Claims 1 to 5, characterised in that the shift transmission has a spur gear (12), driven via the bevel gear transmission (9, 10), on an intermediate shaft (11) parallel to the work spindle (6) and a set (14) of sliding gears, meshing with the spur gear (12), on a countershaft (15) parallel to the work spindle (6), the counter gears (13, 14) of the set (14) of sliding gears being able to be brought selectively into engagement with gears (17, 18) on the work spindle (6).

7. Universal milling and drilling machine according to Claim 6, characterised in that the second counter gear (16) is designed as a bush which is arranged on the countershaft (15) in such a way as to be fixed in terms of rotation and axially displaceable and which, in its front region, has external toothing for engagement with the second gear (17) and, on its rear region which is free from toothing, bears the first counter gear (13) in such a way as to be fixed in terms of rotation.

8. Universal milling and drilling machine according to Claim 6 or 7, characterised in that the set (14) of sliding gears is mounted and axially secured in a shifting sleeve axially movable by an actuating cylinder (42).

9. Universal milling and drilling machine according to one of Claims 1 to 8, characterised in that a device (37, 38) is provided for turning the swivel milling head (3) between a horizontal and a vertical machining position.

10. Universal milling and drilling machine according to one of Claims 1 to 8, characterised in that the swivel milling head (3) is turnable by the drive motor (7).

11. Universal milling and drilling machine according to one of Claims 1 to 10, characterised in that a releasable clamping device (27) is arranged in the supporting housing (1) for locking the swivel milling head (3) on the supporting housing (1) in the selected machining position in such a way as to be secure against turning.

## Revendications

1. Fraiseuse-aléseuse universelle comprenant
- une table porte-pièce (101) montée sur une console ou un bâti,
- un montant de machine (104), auquel est rattaché un boîtier de support (1),
- une tête pivotante, qui est reliée à une face frontale avant (2) du boîtier de support (1) inclinée par rapport à la verticale de 45° obliquement vers le bas et qui peut être pivotée autour d'un axe de pivotement (5) perpendiculaire à la paroi frontale (2),
- une broche (6) logée de manière pivotante dans une tête de fraisage dont l'axe de pivotement (23) est disposé sous un angle de 45° par rapport à l'axe de pivotement (5) de la tête de pivotement, et
- un moteur d' entraînement (7), qui peut être accouplé par un réducteur à roues coniques (9, 10) et un mécanisme de changement de vitesse (12, 14, 17, 18) à la broche (6), tandis que
- la tête pivotante est combinée à la tête de fraisage pour former une tête de fraisage pivotante (3),
caractérisée en ce que le mécanisme de changement de vitesse (12, 14, 17, 18) pour la broche unique (6) disposé en aval du réducteur à roues coniques (9, 10) est aménagé dans la tête de fraisage pivotante (3).

2. Fraiseuse-aléseuse universelle selon la revendication 1, caractérisée en ce que le moteur d'entraînement (7) de la broche (6) est disposé de telle manière dans le boîtier de support (1) que l'arbre de transmission du réducteur (8) s'étend de manière coaxiale par rapport à l'axe de pivotement (5) de la tête de fraisage pivotante (3) et porte la roue conique d'attaque (9) du réducteur à roues coniques (9, 10).

3. Fraiseuse-aléseuse universelle selon la revendication 2, caractérisée en ce que l'arbre de sortie (8) du moteur d'entraînement (7) évolue de manière coaxiale par rapport à l'axe de pivotement (5) de la tête de fraisage pivotante (3).

4. Fraiseuse-aléseuse universelle selon la revendication 3, caractérisée en ce que la roue conique d'entraînement (9) du réducteur à roues coniques (9, 10) est logée sur la tête de fraisage pivotante (3) sur un arbre de réglage (24) coaxial à l'axe de pivotement (5) et peut être accouplée à l'extrémité libre de l'arbre de transmission (8) du moteur d' entraînement (7) coaxial à l'axe de pivotement (5).

5. Fraiseuse-aléseuse universelle selon la revendication 4, caractérisée en ce que l'arbre de transmission (8) est conçu comme arbre creux, dans lequel est guidé l'arbre de réglage (24) relié de manière non pivotante à la tête de fraisage pivotante (3).

6. Fraiseuse-aléseuse universelle selon l'une quelconque des revendications 1 à 5, caractérisée en ce que le mécanisme de changement de vitesse possède un pignon droit (12) entrainé par le réducteur à roues coniques (9, 10) sur un arbre intermédiaire (11) parallèle à la broche (6) ainsi qu'un jeu de pignons baladeurs (14) engrenant avec le pignon droit (12) sur un arbre intermédiaire (15) parallèle à la broche (6), où les roues dentées de l'arbre intermédiaire (13, 14) du jeu de pignons baladeurs (14) peuvent être mises en prise au choix avec des roues dentées (17, 18) sur la broche (6).

7. Fraiseuse-aléseuse universelle selon la revendication 6, caractérisée en ce que le deuxième pignon de renvoi (16) est conçu comme une douille disposée de manière non pivotante et axialement mobile sur l'arbre intermédiaire (15), qui possède sur sa partie avant une denture externe pour engrener avec la deuxième roue dentée (17) et qui porte sur son extrémité arrière exempte de denture le premier pignon de renvoi (13) assuré contre le pivotement.

8. Fraiseuse-aléseuse universelle selon la revendication 6 ou 7, caractérisée en ce que le jeu de pignons baladeurs (14) est logé dans une douille de couplage mobile axialement au moyen d'un cylindre actionneur (42) et qu'il est bloqué axialement.

9. Fraiseuse-aléseuse universelle selon l'une quelconque des revendications 1 à 8, caractérisée en ce qu'un dispositif (37, 38) est prévu pour le pivotement de la tête de fraisage pivotante (3) entre une position de travail horizontale et une position de travail verticale.

10. Fraiseuse-aléseuse universelle selon l'une quelconque des revendications 1 à 8, caractérisée en ce que la tête de fraisage pivotante (3) peut être pivotée par l'intermédiaire du moteur d'entraînement (7).

11. Fraiseuse-aléseuse universelle selon l'une quelconque des revendications 1 à 10, caractérisée en ce que dans le boîtier de support (1) se trouve aménagé un dispositif de serrage amovible (27) pour bloquer de manière non pivotante, dans la position d'usinage choisie, la tête de fraisage pivotante (3) sur le boitier de support (1).
